(19) Europäisches Patentamt
European Patent Office
Office européen des brevets

(11) **EP 2 982 875 A1**

(12) **EUROPEAN PATENT APPLICATION**

(43) Date of publication:
**10.02.2016 Bulletin 2016/06**

(21) Application number: **15168801.7**

(22) Date of filing: **22.05.2015**

(51) Int Cl.:
*F16C 19/38* (2006.01)   *F16C 33/37* (2006.01)
*F16C 23/08* (2006.01)   *F16C 19/28* (2006.01)
*F16C 33/36* (2006.01)   *F16C 19/54* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **26.05.2014   CN 201410226079**

(71) Applicant: **Aktiebolaget SKF**
**415 50 Göteborg (SE)**

(72) Inventors:
• **Song, Hechuan**
  **200240 Shanghai (CN)**
• **Tan, Xiuhua**
  **201906 Shanghai (CN)**
• **Krug, Udo**
  **97531 Theres (DE)**
• **Christiansson, Goran**
  **3762 XJ Soest (NL)**

(74) Representative: **Kuhstrebe, Jochen**
  **SKF GmbH**
  **IA&IP**
  **Gunnar-Wester-Straße 12**
  **97421 Schweinfurt (DE)**

(54) **DOUBLE ROW RADIAL ROLLER BEARING FOR USE AS AXIAL MOVABLE BEARING WITH TAPERED ROLLERS FOR ADJUSTING INTERNAL CLEARANCE OR INTERNAL PRELOAD**

(57)   The present invention provides a tapered roller bearing, comprising double-row inner raceways (1w, lw') arranged symmetrically face-to-face, double-row outer raceways (2w, 2'w'), and two rows of tapered rollers (3,3') disposed between the double-row inner raceways (1w, 1w') and double-row outer raceways (2w,2'w'). The two rows of tapered rollers (3,3') each have a retainer (4,4') for restraining the tapered rollers of the row in question and preventing contact between the rollers. The tapered roller bearing is provided with a floating guide ring member (5) between the two rows of tapered rollers (3,3'), for providing axial abutment and support for the two rows of tapered rollers (3,3'), to permit the two rows of tapered rollers (3,3') to be adjusted by shifting in the width direction of the raceways for adjusting internal clearance or preload. The double row tapered roller bearing can be used as a non-locating bearing axial movable bearing to replace a cylindrical roller bearingin in a conventional shaft system, to eliminate the inherent rigidity deficiency of a cylindrical roller bearing lacking preload.

**Fig. 4a**

EP 2 982 875 A1

**Description**

**Technical field**

The present invention relates to a novel tapered roller bearing and a novel shaft system which uses the bearing as a non-locating-end configuration bearing.

**Background art**

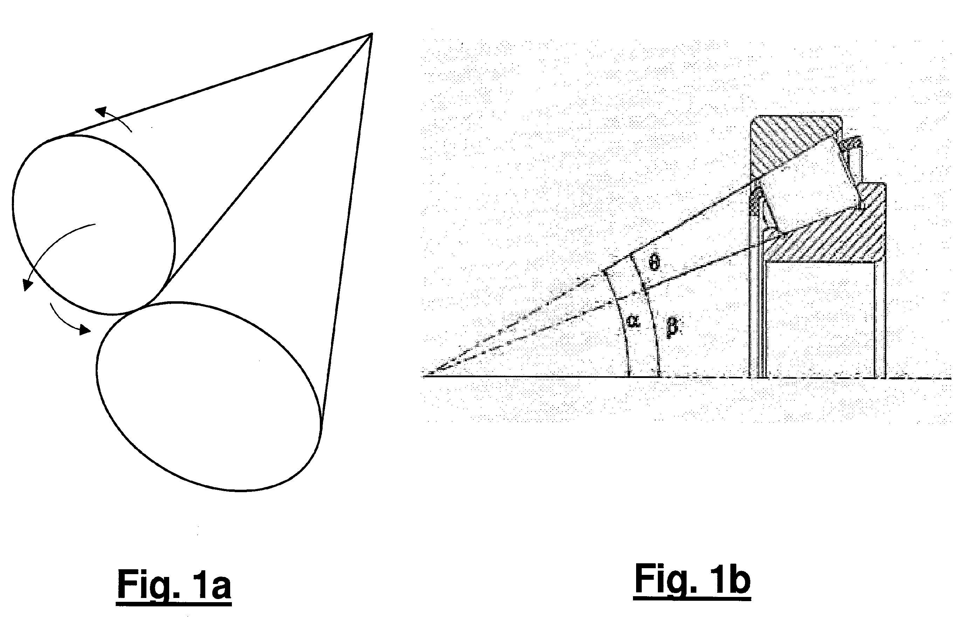

Tapered roller bearings are widely used in the mechanical field on account of their ability to withstand axial and radial loads (collectively referred to as "composite loads") simultaneously. The principle of their operation is that, as shown in Fig. 1a, two cones with coinciding apices can engage in pure rolling motion over each other's surfaces without any relative sliding. Theoretical calculations prove that when the apices coincide, all points on the two cones in the width direction of the raceway have exactly the same tangential speed, so no relative sliding (differential skidding) will occur between the two cones. In practice, the inner raceways, outer raceways and tapered rollers (tapered roller elements) of a tapered roller bearing are actually all designed as conical frustums (truncated cones). Therefore, in the cross-sectional drawing of a tapered roller bearing shown in Fig. 1b, a prerequisite for all the rolling bodies (including the tapered rollers, and the inner and outer raceways) being capable of operation in the form of pure rolling motion is that their cone apices coincide at the same point on the bearing axis (axis of bearing), with the outer ring cone angle $\alpha$, inner ring cone anglee $\beta$ and roller cone angle $\theta$ satisfying the following quantitative relationship: $\theta = \alpha - \beta$. When the above condition is not met, the tapered rollers will be in a complicated state of "rolling + sliding" motion between the inner and outer raceways.

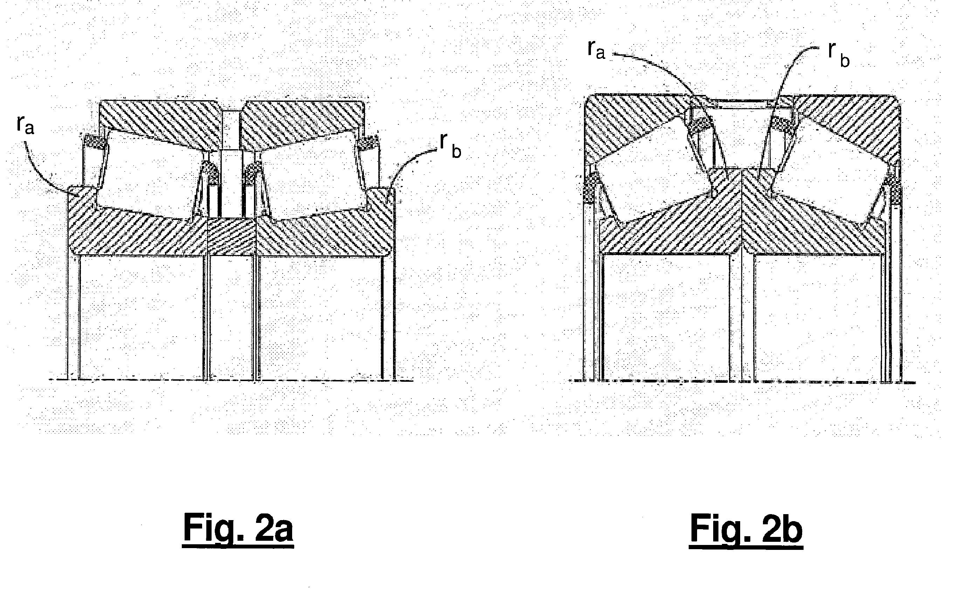

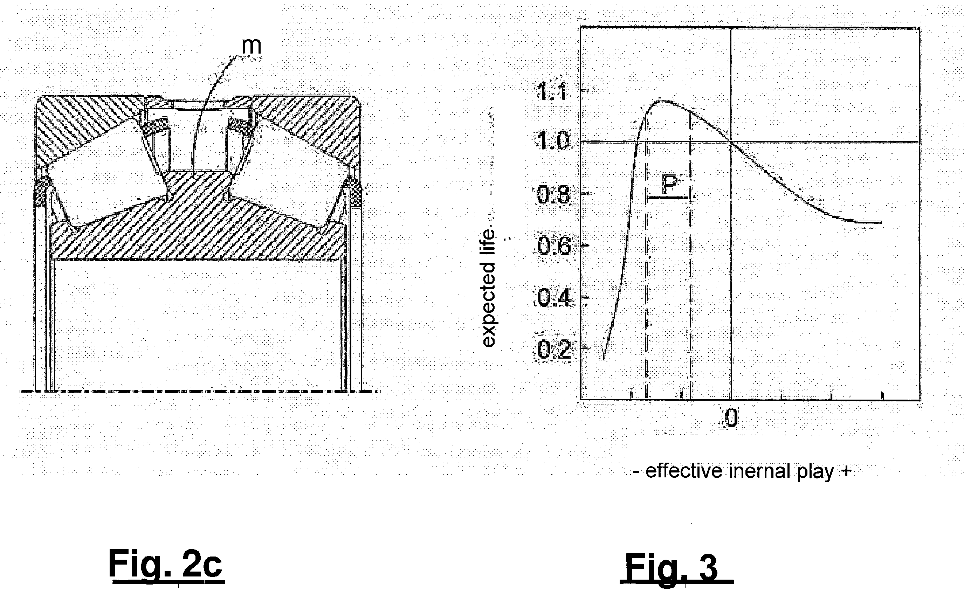

As can be seen from Fig. 1b, the component of the tapered roller bearing which actually withstands an axial load is a guide rib, which is formed on one side of the inner ring and faces the surface of the large end of the roller. When used in a single-row arrangement, a tapered roller bearing can only withstand axial loads from one side; when used in a pair, tapered roller bearings arranged in a double row can withstand axial loads from two directions. Typically, double-row tapered roller bearings can be arranged in two ways, back-to-back and face-to-face. In a back-to-back arrangement, as shown in Fig. 2a, the two rows of tapered rollers have their small end surfaces facing each other, and guide ribs $r_a$ and $r_b$ for bearing axial loads are located on two sides (in the axial direction) of the double-row inner rings which abut each other. In a face-to-face arrangement, as shown in Fig. 2b, the two rows of tapered rollers have their large end surfaces facing each other, and guide ribs $r_a$ and $r_b$ for bearing axial loads are located on abutting inner sides (in the axial direction) of the double-row inner rings. In Fig. 2c, the abutting inner rings of double-row tapered roller bearings have further been fused into a single piece, to form a tapered roller bearing with a double-row face-to-face arrangement and a one-piece inner ring structure. In the situation shown in Fig. 2c, guide ribs $r_a$ and $r_b$ of tapered roller bearings in a double-row face-to-face arrangement are fused together, to form a middle rib m on a one-piece inner ring, which can bear axial loads from any single direction or two directions.

As is well-known, a notable characteristic of tapered roller bearings is that through axial adjustment of the inner and outer rings, axial play and radial play inside the bearing can be eliminated simultaneously, and furthermore a certain amount of contact deformation (commonly referred to as "preload") can be produced between the rolling components. Figs. 2a - 2c show typical ways of adjusting the axial separation of double-row inner rings or double-row outer rings by providing a suitably sized inner spacer or outer spacer, in order to achieve bearing preload.

However, as can be seen from the graph of the relationship between expected life and internal play shown in Fig. 3, a roller bearing can only attain the optimum expected life within a relatively small negative play interval p (referred to below as the "optimum play interval"); in the remaining play intervals which account for the greater part of the range, the expected life of the bearing is notably lower. In particular, when the internal play moves further to the left from the optimum play interval p (decreases), the internal stress of the bearing will increase sharply, leading to a steep increase in temperature rise, and a dramatically shortened life, and seizing may even occur. Due to the abovementioned characteristic of tapered roller bearings, when a tapered roller bearing is used in the shaft system of an apparatus such as a gearbox, it must be used in conjunction with a matching bearing which permits relative axial movement of inner and outer rings, such as a cylindrical roller bearing, for the purpose of avoiding unfavourable situations such as axial seizing. However, although a cylindrical roller bearing permits relative adjustment of inner and outer rings in the axial direction, in practice it is often difficult to achieve precise radial preloading thereof. This is because the radial preloading of a cylindrical roller bearing places very high requirements in terms of processing precision on associated components such as the bearing rotation shaft, bearing seat and housing hole, and therefore often cannot be used in practice due to cost considerations. Thus, the real world awaits the invention of a novel bearing which not only permits axial adjustment of inner and outer rings, but can also achieve radial preloading economically and conveniently.

## Content of the invention

The present invention provides a novel tapered roller bearing which can not only undergo non-centred adjustment within a given axial range in the manner of a cylindrical roller bearing, but can also achieve preloading by a method similar to that used in a conventional tapered roller bearing.

To achieve the above object, in terms of structure the novel tapered roller bearing comprises double-row inner raceways arranged symmetrically face-to-face, double-row outer raceways, and two rows of tapered rollers disposed between the double-row inner raceways and double-row outer raceways. The two rows of tapered rollers each have a retaining frame for restraining the tapered rollers of the row in question and preventing contact between the rollers. In addition, the novel tapered roller bearing is also provided with a floating guide ring member between the two rows of tapered rollers, for providing axial abutment and support for the two rows of tapered rollers. The guide ring member permits the two rows of tapered rollers to be able to be adjusted by shifting in the width direction of the raceways with non-centred running of the novel tapered roller bearing. In addition to the axial shifting possibility of the floating guide ring member in respect to the inner raceways and/or outer raceways it could be beneficial to build the floating guide member in such a way that it could be inclined to a certain extend with respect to the protruding member. This gains additional feature enables to compensate inclination between a shaft and a housing, respectively inclination between the inner ring and the outer raceway.

Although the novel tapered roller bearing which employs the floating guide ring member described above has lost the axial load bearing capacity of a conventional tapered roller bearing with fixed guide ribs, it has thereby gained the ability to permit position adjustment of the inner and outer rings within a certain axial range. This position adjustment is achieved under the prerequisite that the internal play (preload state) of the bearing remains unchanged, and accompanied by automatic shifting of the two rows of tapered rollers in the width direction of the inner and outer raceways; it is a process of progressive self-adjustment of the bearing in a running state, and will not give rise to situations like the bearing seizure that results from excessive negative play in a conventional tapered roller bearing. The capacity for relative adjustment in the axial direction between the inner and outer rings endows the novel tapered roller bearing with a capacity for non-centred running which a conventional tapered roller bearing has never had under preloaded conditions, so that the novel tapered roller bearing has very broad and completely new application prospects. For example, in conventional shaft systems (axle systems) such as a vehicle gearbox, the novel tapered roller bearing may be used to replace a cylindrical roller bearing, thereby forming a novel shaft system. In terms of structure, the novel shaft system comprises a rotation shaft for mechanical transmission, the rotation shaft being supported on an external fixing means by two configuration bearings distributed at an interval in the axial direction. The two configuration bearings are a locating-end configuration bearing which limits position adjustment of the rotation shaft in the axial direction, and a non-locating-end configuration bearing which permits position adjustment of the rotation shaft in the axial direction. The non-locating-end configuration bearing is the novel tapered roller bearing according to the present invention. The novel shaft system supported by the novel tapered roller bearing not only has reduced vibration and noise levels, but also has higher radial rigidity.

Various particular embodiments and beneficial effects of the present invention are explained in detail below in conjunction with the accompanying drawings.

## Description of the accompanying drawings

Fig. 1a is a drawing showing the principle of operation of a tapered roller bearing;

Fig. 1b is an operational principle drawing showing the cone apices of different rolling bodies in a tapered roller bearing coinciding at one point;

Fig. 2a is a partial sectional schematic diagram of a double-row tapered roller bearing with a back-to-back arrangement;

Fig. 2b is a partial sectional schematic diagram of a double-row tapered roller bearing with a face-to-face arrangement;

Fig. 2c is a partial sectional schematic diagram of a tapered roller bearing with a double-row face-to-face arrangement and a one-piece inner ring structure;

Fig. 3 is a graph of the relationship between expected life and internal play of a roller bearing;

Fig. 4a is a partial sectional schematic diagram showing a guide ring member directly adjoining a one-piece inner ring in the novel tapered roller bearing;

Fig. 4b is a partial sectional schematic diagram showing a guide ring member adjoining a protruding structure of a one-piece inner ring in the novel tapered roller bearing;

Fig. 4c is a partial sectional schematic diagram showing a guide ring member adjoining double-row inner rings and/or an inner spacer in the novel tapered roller bearing;

Fig. 4d is a partial sectional schematic diagram showing a guide ring member adjoining a protruding structure formed by adjoining double-row inner rings in the novel tapered roller bearing;

Fig. 4e is a partial sectional schematic diagram showing a guide ring member adjoining an inner spacer with a radial thickness larger than that of double-row inner rings in the novel tapered roller bearing;

Fig. 4f is a partial sectional schematic diagram showing a guide ring member adjoining double-row outer rings in the novel tapered roller bearing;

Fig. 5 shows a partial sectional schematic diagram of the two rows of tapered rollers being adjusted by shifting in the width direction of the raceways when the novel tapered roller bearing makes a transition from a centred state to a non-centred state;

Fig. 6 shows a partial sectional magnified drawing of a right-row tapered roller being adjusted by shifting between the right-side inner and outer raceways when the novel tapered roller bearing makes a transition from a centred state to a non-centred state;

Fig. 7a shows a partial three-dimensional perspective drawing of the guide ring member and the large-end surfaces of the two rows of tapered rollers forming an internally tangent fit between a large spherical surface and small spherical surfaces;

Fig. 7b shows a partial sectional schematic diagram of the guide ring member and the large-end surfaces of the two rows of tapered rollers forming an internally tangent fit between a large spherical surface and small spherical surfaces;

Fig. 8a shows a partial three-dimensional perspective drawing of the guide ring member and the large-end surfaces of the two rows of tapered rollers forming an internally tangent fit between a large torus and small spherical surfaces;

Fig. 8b shows a partial sectional schematic diagram of the guide ring member and the large-end surfaces of the two rows of tapered rollers forming an internally tangent fit between a large torus and small spherical surfaces;

Fig. 9a shows a partial three-dimensional perspective drawing of the guide ring member and the large-end surfaces of the two rows of tapered rollers forming an internally tangent fit between a large conical surface and small spherical surfaces;

Fig. 9b shows a partial sectional schematic diagram of the guide ring member and the large-end surfaces of the two rows of tapered rollers forming an internally tangent fit between a large conical surface and small spherical surfaces;

Fig. 10a shows a sectional schematic diagram of a conventional shaft system in which a cylindrical roller bearing is used as a non-locating-end configuration bearing; and

Fig. 10b shows a sectional schematic diagram of a novel shaft system in which a novel tapered roller bearing is used as a non-locating-end configuration bearing.

**Particular embodiments**

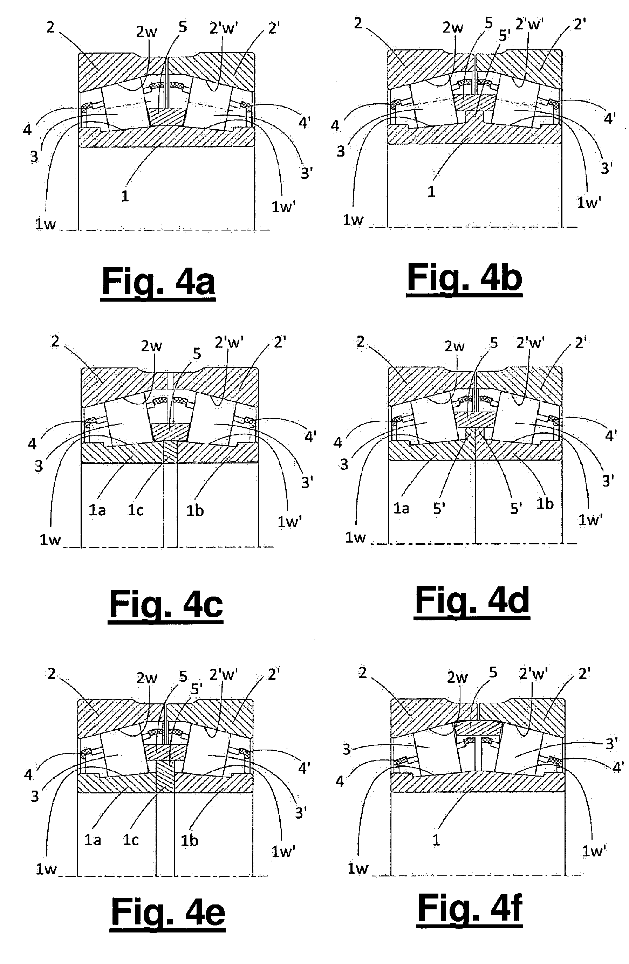

Figs. 4a - 4f show different design structures of the novel tapered roller bearing with a double-row face-to-face arrangement (referred to below simply as the "novel tapered roller bearing") of the present invention, being partial sectional schematic diagrams obtained by cutting the body of the novel tapered roller bearing along an imaginary plane containing the bearing axis. As can be seen from Fig. 4a, the novel tapered roller bearing has a similar structure to that of the conventional tapered roller bearing with a double-row face-to-face arrangement and a one-piece inner ring (referred to below simply as the "conventional tapered roller bearing") shown in Fig. 2c; both include an inner ring 1 formed as one piece, double-row outer rings 2 and 2' which correspond to the inner ring 1 formed as one piece, and two rows of tapered rollers 3 and 3' disposed between the inner ring 1 formed as one piece and the double-row outer rings 2 and 2'. The two rows of tapered rollers 3 and 3' are provided with retaining frames 4 and 4' for restraining the tapered rollers of the row in question and preventing contact between the rollers. The difference is that instead of a fixed middle rib m, a floating guide ring member 5 is provided on the inner ring 1 of the novel tapered roller bearing between double-row inner raceways 1w and 1w' thereof. The floating guide ring member 5 (referred to below simply as the "guide ring member") is used to provide floating abutment and support for the two rows of tapered rollers 3 and 3', and allow the two rows of tapered rollers 3 and 3' to be adjusted by shifting within a given range in the width direction of the raceways. It can also be seen from Fig. 4a that the guide ring member 5 directly adjoins a flat surface of the inner ring 1 in a floating manner, so that under the action of radial pressure from the inner and outer raceways 1w, 1w', 2w and 2'w', the two rows of tapered rollers 3 and 3' always abut two sides of the guide ring member 5, and are adjusted axially within a given range while clamping the latter.

In the situation shown in Fig. 4a, the positions where the guide ring member 5 abuts the two rows of tapered rollers 3 and 3' deviate in the radial direction from the axes of rotation of the latter, and the deflection torque thus created makes it necessary for the inner and outer raceways 1w, 1w', 2w and 2'w' to provide an opposite torque in order to keep the tapered rollers balanced. This results in the pressure borne by the tapered rollers 3 and 3' being distributed non-uniformly in the width direction of the raceways, imperceptibly increasing the resistance to the running of the tapered rollers between the inner and outer raceways. In view of this, the radial dimension of the guide ring member 5 can be increased directly to enable the end faces on the two sides thereof to abut the positions of the axes of rotation of the two rows of tapered rollers 3 and 3', to fundamentally eliminate the deflection torque effect caused by the guide ring member 5 abutting the two rows of tapered rollers 3 and 3' eccentrically. Of course, as an alternative, as shown in Fig. 4b, a fixed protruding member 5' can be provided on the inner ring 1 to "prop up" the guide ring member 5 in the radial direction, to enable the latter to naturally cover the positions of the axes of rotation of the two rows of tapered rollers 3 and 3'.

It must be pointed out that although the protruding member 5' is similar in structure to the middle rib m in the conventional tapered roller bearing shown in Fig. 2c, the purpose of providing it is not to provide any axial load bearing capacity for the novel tapered roller bearing, but to "lift" the guide ring member 5 to a suitable height in the radial direction, to enable the end faces on the two sides of the guide ring member 5 to naturally cover the positions of the axes of rotation of the two rows of tapered rollers 3 and 3'. In this sense, the protruding member 5' is merely a "stepping-stone" for the guide ring member 5, and there is a need to prevent it from becoming itself an actual obstacle to the position adjustment of the two rows of tapered rollers 3 and 3' over the raceway width. In view of this, a protruding structure 5' with an axial dimension smaller than the guide ring member 5 can be designed and used, to ensure that it can never touch the inside end faces of the two rows of tapered rollers 3 and 3' when the bearing is in a non-centred running state.

It can also be seen from the above description that in fact, the realization of the function of the novel tapered roller bearing does not depend on whether the inner ring 1 employs a one-piece structure. As shown in Fig. 4c, the double-row inner rings 1a and 1b abut each other, or the double-row inner rings 1a and 1b abut each other via an inner spacer 1c; as long as the guide ring member 5 is not prevented from floating in the axial direction along the periphery of the inner rings, the novel tapered roller bearing can in each case be endowed with the capacity for axial adjustment. Similarly, the use of a one-piece structural form for the inner ring 1 is not a condition for the arrangement of the protruding member 5'. For example, as shown in Fig. 4d, the protruding member 5' can be formed by adjoining double-row inner rings 1a and 1b, or as shown in Fig 4e, can be formed independently by an inner spacer 1c with a radial thickness larger than that of the inner rings 1a and 1b. No matter which form is adopted, any protruding member 5' can be employed, as long as it can support the guide ring member 5 effectively, and does not prevent free floating thereof in the axial direction.

In the scenarios shown in Figs. 4a - 4e, the guide ring member 5 adjoins the inner ring(s) and/or inner spacer between inner rings. As an alternative, as shown in Fig. 4f, the guide ring member 5 may also adjoin the outer rings and/or an outer spacer (not shown in the figure) disposed between the outer rings. In practice, a suitable choice can be obviously be made according to actual requirements.

It can also be seen from the above description that although the guide ring member 5 can float freely in the axial direction, this does not prevent the novel tapered roller bearing from being able to be preloaded in a conventional manner similar to that used for a conventional tapered roller bearing. For example, inner/outer spacers of suitable dimensions can be provided to adjust the separation of the double-row inner rings or double-row outer rings in the axial direction, so as to achieve precise preloading.

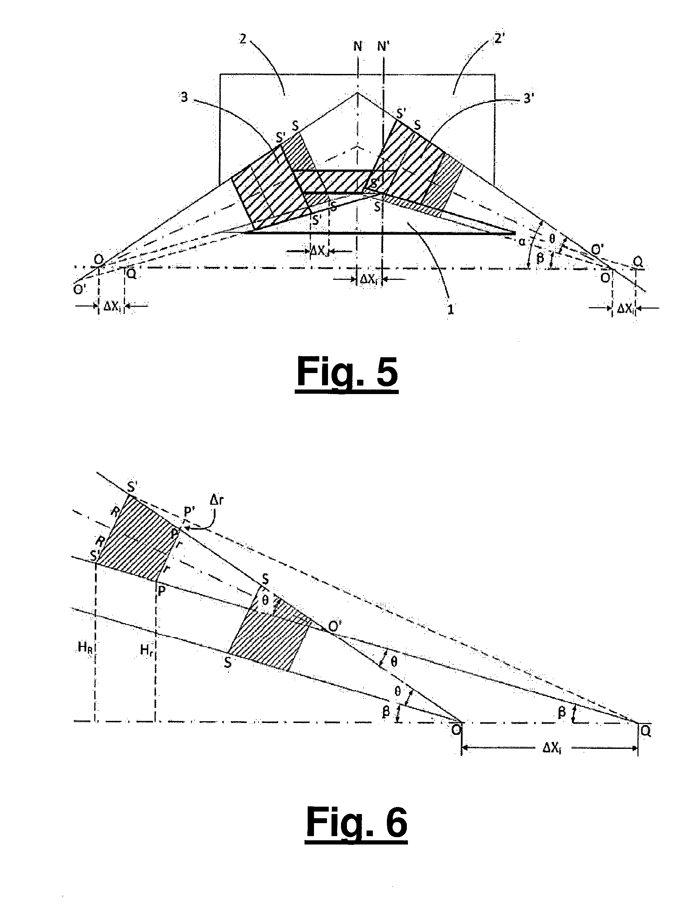

Fig. 5 shows a partial sectional schematic diagram of the two rows of tapered rollers 3 and 3' of the novel tapered roller bearing being adjusted by shifting in the width direction of the raceways when the novel tapered roller bearing makes a transition from a centred state to a non-centred state. As shown in the figure, in the centred running state, the cone apices of the inner and outer raceways 1w, 1w', 2w and 2'w' coincide at points O on the bearing axis. As stated in the background art section, in this state the two rows of tapered rollers 3 and 3' of the novel tapered roller bearing are capable of operation in the form of pure rolling motion between the inner and outer raceways 1w, 1w', 2w and 2'w'.

Suppose that under non-centred running conditions, the inner ring 1 of the novel tapered roller bearing is shifted sideways axially relative to the outer rings 2 and 2', such that the cone apices of the various rolling bodies no longer coincide. Specifically, as shown in Fig. 5, suppose that the outer rings 2 and 2' remain unmoved because they are fixed to a bearing seat, then the cone apices of the outer raceways 2w and 2'w' will remain at points O on the bearing axis; and when the inner ring 1 is shifted sideways, the cone apices of the inner raceways 1w and 1w' move from the initial points O to subsequent points Q. What is described above is a process of translation of the inner ring (regardless of whether this is a one-piece inner ring 1 or double-row inner rings 1a and 1b) as a whole in the axial direction; this is very similar to non-centred running of a bearing due to thermal expansion of the rotation shaft in practice. Obviously, in the course of this translation process, the geometric space between the inner and outer rings changes accordingly. Specifically, the internal space of the bearing structure shown in the right half of Fig. 5 becomes narrower in the radial direction, while the internal space of the bearing structure in the left half becomes wider in the radial direction, thereby forcing the two rows of tapered rollers 3 and 3' to be adjusted by shifting in the width direction of the raceways, in the opposite direction to the non-centred inner ring 1. By way of the above adjustment, the cone apices of the two rows of tapered rollers 3 and 3' move from the initial points O to subsequent points O'. In other words, the result of non-centred running is to cause the cone apices of three parts, namely the double-row tapered rollers, the inner raceways and the outer raceways, to finally stop at points O', Q and O. Although the cone angles $\alpha$, $\beta$ and $\theta$ of these three parts are all unchanged, and still satisfy the relationship $\theta = \alpha - \beta$, the cone apices of the three parts no longer coincide, so no longer satisfy the prerequisite for operation of the tapered roller bearing in the form of pure rolling motion. Specifically, the scattering of the cone apices has the result that the tangential speeds of all points on all the rolling bodies in the width direction of the raceways are no longer exactly the same, so that relative sliding of tapered rollers between the inner and outer raceways occurs.

It will be readily appreciated that in terms of numerical values, the relative sliding should be equal to the difference in tangential speeds of different points on the rolling bodies in the width direction of the raceways. Taking the right-half structure of the novel tapered roller bearing as an example, details of the relative sliding between the tapered rollers thereof and the raceways in a non-centred state are explained below.

Fig. 6 is a partial magnified drawing of a right-row tapered roller 3' being adjusted by shifting on the right-side inner raceway 1w'. In order to clearly display the changes in position of the various rolling members in the figure, the magnitude $\Delta X_i$ of non-centring of the inner ring 1 as well as the resulting adjustment range of the right-row tapered roller 3' in the width direction of the raceway have been intentionally exaggerated. As can be seen from Fig. 6, once non-centred running occurs, the large end surface of the right-row tapered roller 3' moves from an initial position S to a subsequent position S'. Supposing that the angular velocity of rotation of the inner ring 1 is $\omega_i$, then the rolling linear speed $v_{S'}$ of the right-side inner raceway 1w' thereof at position S' should be:

$$v_{S'} = \omega_i \cdot H_R = \grave{u}_i \cdot QS' \cdot sin\,\beta \quad \text{.....................................} \,.\,\text{...} \quad (1)$$

Supposing that there is no relative sliding between the right-row tapered roller 3' and the right-side inner raceway 1w' at position S' (i.e. they are in a state of pure rolling motion), then the rolling linear speed $v_R$ of the tapered roller 3' at a position corresponding to S' should be equal to the rolling linear speed $v_{S'}$ of the inner raceway 1w' at the same position, i.e.:

$$v_{S'} = v_R \quad \text{.................} \cdot \text{.................} \cdot \text{.............................} \cdot \quad (2)$$

Supposing that the large-end radius of the tapered roller 3' is R, then the angular velocity of rotation $\omega_r$ of the right-row tapered roller 3' relative to its axis of rotation is easily calculated and should be:

$$\omega_r = \frac{v_R}{2R} = \frac{v_{S'}}{2R} = \grave{u}_i \cdot \frac{QS'}{2R} \cdot sin\,\beta \,\text{... ... ... ... ... ... ... ... .... ... ... ... ,... ...} (3)$$

Supposing that the small-end radius of the tapered roller 3' is r, then the rolling linear speed $v_r$ of the tapered roller 3' at the position of the small end thereof (corresponding to a point P) can be calculated on the basis of the angular velocity of rotation $\omega_r$ of the tapered roller 3', and should be:

$$v_r = \grave{u}_r \cdot 2r = \grave{u}_i \cdot \frac{r}{R} \cdot QS' \cdot sin\,\beta \,\text{... ... ... ... ... ... ... ... ... .... ... ... .. ....} (4)$$

Starting from the angular velocity of rotation $\omega_i$ of the inner ring 1, it is easy to calculate the rolling linear speed $v_P$ of the right-row inner raceway 1w' at the position of the roller small end (corresponding to point P):

$$v_P = \grave{u}_i \cdot H_r = \grave{u}_i \cdot QP \cdot sin\,\beta \,\text{... ... ... ... ... ... ... ... ... ... ... ... .... ...} (5)$$

The difference $\Delta v_r$ between the rolling linear speed $v_P$ of the right-side inner raceway 1w' at the position of point P corresponding to the small end surface of the right-row tapered roller 3' and the rolling linear speed $v_r$ of the right-row tapered roller at the same position can be calculated from relationships (4) and (5), and should be:

$$\Delta v_r = v_P - v_r = \grave{u}_i \cdot QS' \cdot sin\,\beta \cdot \left(\frac{QP}{QS'} - \frac{r}{R}\right) \text{... ... ... ... .... .... ... ...} (6)$$

Furthermore, it can also be clearly seen from Fig. 6 that:

$$\frac{QP}{QS'} = \frac{PP'}{S'S'} = \frac{2r + \Delta r}{2R} \quad \ldots\ldots\ldots\ldots\ldots\ldots\ldots\ldots\ldots\ldots\ldots\ldots\ldots\ldots\ldots\ldots\ldots\ldots\ldots\ldots\ldots.(7)$$

wherein $\Delta r$ is the length of an extension of the small-end diameter of the right-row tapered roller 3' to a point P' on line QS'.

Based on relationship (7), relationship (6) can be simplified to:

$$\Delta v_r = \dot{u}_i \cdot QS' \cdot \sin \hat{a} \cdot \left(\frac{2r + \Delta r}{2R} - \frac{r}{R}\right) = \dot{u}_i \cdot QS' \cdot \sin \beta \cdot \frac{\Delta r}{2R} \quad \ldots\ldots.(8)$$

Based on the earlier relationship (1), it is known that $\omega i \cdot QS \cdot \sin \beta = v_{S'}$, so relationship (8) can be further simplified to:

$$\frac{\Delta v_r}{v_{S'}} = \frac{\Delta r}{2R} \cdot \ldots\ldots\ldots\ldots\ldots\ldots\ldots\ldots\ldots\ldots\ldots\ldots\ldots\ldots\ldots\ldots\ldots\ldots\ldots\ldots.(9)$$

Furthermore, the following can be obtained from relationships (1), (5) and (7):

$$\frac{v_{S'}}{v_p} = \frac{QS'}{QP} = \frac{2R}{2r + \Delta r} \rightarrow v_{S'} = \frac{2R}{2r + \Delta r} \cdot v_p \quad \ldots\ldots\ldots\ldots\ldots\ldots\ldots.(10)$$

The following can be obtained by substituting relationship (10) into relationship (9):

$$\frac{\Delta v_r}{v_p} = \frac{\Delta r}{2r + \Delta r} \quad \ldots\ldots\ldots\ldots\ldots\ldots\ldots\ldots\ldots\ldots\ldots\ldots\ldots\ldots\ldots.(11)$$

Relationship (11) means that if the right-row tapered roller 3' is always in a state of pure rolling motion at a position corresponding to the large-end surface thereof (i.e. point S'), then the ratio of the relative sliding speed $\Delta v_r$ thereof at a position corresponding to the small-end surface (i.e. point P) to the rolling linear speed $v_P$ of the right-side inner raceway 1w' at the same position should be equal to $\frac{\Delta r}{2r + \Delta r}$.

It can be seen from Fig. 6 that in terms of numerical values, $\frac{\Delta r}{2r + \Delta r}$ should be related to the magnitude $\Delta X_i$ of non-centring sideways shift of the inner ring 1 (i.e. the length of OQ), and also be related to intrinsic parameters of the novel tapered roller bearing such as roller cone angle $\theta$ and inner ring cone angle $\beta$. For the purpose of simplifying calculation, suppose that the roller cone angle $\theta = 9°$, the inner ring cone angle $\beta = 6°$, the small-end radius of the tapered roller r = 22.5 mm, and the rolling surface width of the tapered roller 1 = 40 mm; then theoretical calculation values for relative sliding between the right-side inner raceway 1w' and the right-row tapered roller 3' at the position of the small end thereof (corresponding to point P) are calculated for the following five cases:

| $\Delta X_i$ (mm) | $\Delta_r$ (mm) | $\Delta v_r / v_P$ (%) |
|---|---|---|
| 4.5 | 0.1398 | 0.31% |
| 9.0 | 0.2734 | 0.60% |
| 13.5 | 0.4013 | 0.88% |
| 18.0 | 0.5259 | 1.16% |

(continued)

| $\Delta X_i$ (mm) | $\Delta_r$ (mm) | $\Delta v_r / v_P$ (%) |
|---|---|---|
| 22.5 | 0.6438 | 1.41% |

The above calculation results indicate that even in the fifth case, where the numerical value of the magnitude $\Delta X_i$ of non-centring sideways shift of the inner ring reaches the small-end radius of the tapered roller (22.5 mm), the maximum relative sliding of the tapered roller 3' only reaches 1.41% of the rolling linear speed of the inner raceway 1w' at the same position. For a tapered roller bearing, although this percentage of relative sliding will give rise to skewing of the tapered rollers towards the outside of the raceway, it is not enough to have a substantive adverse effect on normal running of the bearing. This is because it is perfectly possible for this kind of skew to be controlled effectively under the regulating action of the retaining frames 4 and 4' and favourable lubrication conditions, and the tapered rollers can ultimately run reliably between the inner and outer raceways with a composite motion of "rolling + sliding". The overall manifestation of such "rolling + sliding" composite running is that the tapered rollers still roll forwards on the raceways, but part of the rolling surface thereof near an end face on one side will experience relative sliding between the inner and outer raceways.

It must be pointed out that since the structure of the novel tapered roller bearing is symmetric, the above calculations and explanations pertaining to Fig. 6 are similarly applicable to the left-half structure in Fig. 5. Furthermore, the details of the relative sliding of the tapered roller on the outer raceway 2'w' are also similar to the above conclusions on the inner raceway 1w', so are not repeated here.

Experiments demonstrate that within a limited range of designed non-centring magnitude, the relative sliding will not have a significant adverse effect on the running and lifespan of the novel tapered roller bearing. In fact, relative sliding between the roller and the raceway has existed for a long time in the field of tapered roller bearings. For example, due to processing precision limitations, it is not always possible in practice to make the tapered roller into the shape of a perfect frustum (i.e. truncated cone). Even when it can be processed to have a precise conical shape, the position of the roller in the width direction of the raceway will not necessarily always be able to ensure that the cone apex thereof coincides precisely with the cone apices of the inner and outer raceways. All of the above factors might lead to the cone apices of the rolling bodies being scattered, causing relative sliding between the rolling bodies. However, practice demonstrates that as long as the design meets specifications, relative sliding within a certain range will not have a substantive adverse effect on the long-term running of the tapered roller bearing.

It must also be pointed out that in practice, the rolling surface of the tapered roller is conventionally designed to have a logarithmic profile or a crowned profile (also called a "convex design"), for the purpose of eliminating or alleviating the problem of stress concentration caused by the edges of the roller contacting the raceway. As well as eliminating stress concentration, the convex design mentioned above also helps to reduce relative sliding between the roller and the raceway, reducing the ratio $\Delta v_r / v_P$ effectively, and thereby further ensuring long-term reliable running of the novel tapered roller bearing.

The mathematical relationship between the magnitude of non-centred running and position adjustment of the two rows of tapered rollers in the width direction of the raceways is analysed further below. As Fig. 5 shows, in a non-centred running state, the double-row structure of the novel tapered roller bearing is distributed with axial symmetry relative to a centre line N. At this time, the cone apices of the inner and outer raceways coincide at points O on the bearing axis. For this reason, the line OO is used to represent the bearing axis hereinbelow. Once non-centred running occurs, supposing that the magnitude of sideways shift of the inner ring 1 relative to the outer rings 2 and 2' is $\Delta X_i$, then this non-centring sideways shift will have the following consequences: ① The outer rings 2 and 2' are still fixed in the bearing seat, so the cone apices of the outer raceways are still held at points O, but the cone apices of the inner raceways have moved from points O (their positions in the centred state) to points Q (their positions in the non-centred state), and the distance between two points Q and O (expressed below as "OQ") is equal to the sideways shift $\Delta X_i$ of the inner ring 1. ② Conical surfaces of the inner and outer raceways converge in space to form a circle (unlike previously when only the cone apices of the two coincided); this circle can be mathematically defined as the closed curve obtained by rotating point O' shown in Fig. 5 or 6 around the bearing axis OO by one revolution. ③ The right-row tapered roller 3' is "squeezed" by the right-side inner and outer raceways in the radial direction, and is therefore forcibly adjusted by shifting in the width direction of the raceways, in the opposite direction to the non-centred inner ring 1, so that the large-end surface thereof moves from the initial position S on the raceway to the subsequent position S'. ④ Under the "squeezing" action of the guide ring member 5, the left-row tapered roller 3 experiences a shifting adjustment, which corresponds to the right-row tapered roller 3', in the width direction of the raceways, and moves from the initial position S to the subsequent position S'. The mathematical relationship between the displacement SS' of the two rows of tapered rollers 3 and 3' in the width direction of the raceways and the non-centring shift $\Delta X_i$ of the inner ring 1 is analysed below.

As stated previously, the novel tapered roller bearing has a symmetric structure, so the following explanation and analysis of the right half of Fig. 5 should similarly be applicable to the left half of Fig. 5. It can be seen from the right half of Fig. 5 that ΔOSS and ΔO'S'S' have fully identical internal angles, with the bases SS and S'S' of the two both corresponding to the large-end surface of the right-row tapered roller 3'; therefore ΔOSS and ΔO'S'S' are two congruent isosceles triangles. Thus, OS and O'S', as two triangle legs, should also be of equal length, i.e.:①

$$OS = O'S' \qquad \qquad \ldots\ldots\ldots\ldots\ldots\ldots\ldots\ldots\ldots\ldots\ldots\ldots\ldots\ldots\ldots\text{. .} \quad ①$$

Furthermore, it can also be seen from the right half of Fig. 5 that:

$$OS = OO' + O'S \qquad \ldots\ldots\ldots\ldots\ldots\ldots\ldots\ldots\ldots\ldots\ldots\ldots\text{. . .} \quad ②$$

$$O'S' = O'S + SS' \qquad \ldots\ldots\ldots\ldots\ldots\ldots\ldots\ldots\ldots\ldots\ldots\text{. . .} \quad ③$$

By combining the three relationships above, the following can be obtained:

$$OO' = SS' \qquad \qquad \ldots\ldots\ldots\ldots\ldots\ldots\ldots\ldots\ldots\ldots\ldots\ldots\ldots\ldots\text{. .} \quad ④$$

Relationship ④ means that the shift distance SS' of the right-row tapered roller 3' in the width direction of the raceway is equal to the separation OO' of the cone apices of the inner and outer raceways which is brought about by shifting.

As stated above, the axial sideways shift of the inner ring 1 causes the cone apex of the inner raceway to move from point O to point Q; the distance OQ between these two points should be the same as the non-centring sideways shift $\Delta X_i$ of the inner ring 1, i.e.:

$$OQ = \Delta X_i \qquad \ldots\ldots\ldots\ldots\ldots\ldots\ldots\ldots\ldots\ldots\ldots\ldots\text{. .} \quad ⑤$$

In ΔOQO', according to the law of sines, the following should hold:

$$\frac{OO'}{\sin \beta} = \frac{OQ}{\sin \theta} \quad \rightarrow \quad OO' = OQ \cdot \frac{\sin \beta}{\sin \theta} \quad \ldots\ldots\ldots\ldots\ldots\ldots\ldots\ldots\ldots\ldots.⑥$$

By combining relationships ④, ⑤ and ⑥, the following can be obtained:

$$SS' = OO' = \Delta X_i \cdot \frac{\sin \beta}{\sin \theta} \quad \ldots\ldots\ldots\ldots\ldots\ldots\ldots\ldots\ldots\ldots\ldots\ldots\ldots.⑦$$

Relationship ⑦ means that a proportional relationship exists between the adjustment distance SS' of the right-row tapered roller 3' in the width direction of the raceway and the non-centring shift $\Delta X_i$ of the inner ring 1; this proportional relationship depends on the ratio of sines of the inner ring cone anglee β and the roller cone angle θ. The symmetry of the structure implies that the conclusion reached on the basis of the right half of Fig. 5 should similarly be applicable to the left half of Fig. 5. Therefore, when the novel tapered roller bearing is in a non-centred running state, relationship ⑦ similarly applies to the adjustment distance SS' of the left-row tapered roller 3 thereof in the width direction of the raceway. This means that the position adjustments of the two rows of tapered rollers 3 and 3' in the width direction of the raceways are always equidistant and synchronous, so the guide ring member 5 can always reliably abut between the two rows of tapered rollers 3 and 3'.

Relationship ⑦ also means that as long as the design incorporates a rational limitation of the ratio of sin β to sin θ (e.g. **sin β/sin θ ≤ 1**), the distance by which the two rows of tapered rollers 3 and 3' are adjusted in the width direction of the raceway can be limited effectively. From the point of view of design, this has major significance for the rational selection of raceway width allowance (i.e. the difference in width between the inner/outer raceways and the tapered roller rolling surface). On the one hand, a sufficient width allowance can ensure reliable running of the two rows of tapered rollers 3 and 3' on the raceways; on the other hand, a suitable design allowance can avoid wastage of materials and shaft separation caused by excessively large size. Taking **sin $\beta$ / sin $\theta$ = 1** as an example, under this condition, the requirement for raceway width allowance would not exceed the maximum non-centring shift magnitude $\Delta X_i$ between the inner and outer rings.

The mathematical relationship between the sideways shift $\Delta X_a$ in the axial direction of the guide ring member 5 clamped between the two rows of tapered rollers 3 and 3', and the non-centring shift $\Delta X_i$ of the inner ring 1, is analysed further below. As stated previously, the shifts of the two rows of tapered rollers 3 and 3' in the width direction of the raceway are always equidistant and synchronous. Supposing that, as shown in Fig. 5, the guide ring member 5 actually abuts radial inner edge positions on the two rows of tapered rollers 3 and 3', then at this time the sideways shift $\Delta X_a$ of the guide ring member 5 in the axial direction corresponds to the projected length onto the bearing axis OO of the displacement SS' of the two rows of tapered rollers 3 and 3' in the width direction of the raceways, i.e.:

$$\Delta X_a = SS' \cdot cos\,\beta = \Delta X_i \cdot \frac{sin\,\beta}{sin\,\theta} \cdot cos\,\beta \dots\dots\dots\dots\dots\dots\dots\dots\dots\dots \text{⑧}$$

Relationship ⑧ means that the adjustment distance $\Delta X_a$ of the guide ring member 5 along with the two rows of tapered rollers 3 and 3' in the axial direction still depends on the non-centring shift $\Delta X_i$ of the inner ring 1 and the angular relationship between $\beta$ and $\theta$.

It must be pointed out that the axial sideways shift $\Delta X_a$ of the guide ring member 5 is in fact also related to the radial position at which it actually abuts the two rows of tapered rollers 3 and 3'. As Fig. 4b shows, supposing that the guide ring member 5 actually abuts at the position of the axes of rotation of the two rows of tapered rollers 3 and 3', and not the radial inner edge positions on the two rows of tapered rollers 3 and 3' as shown in Fig. 5, then according to Fig. 6, at this time the projected length (which actually represents the sideways shift $\Delta X_a$) of SS' onto the bearing axis OO should be:

$$\Delta X_a = SS' \cdot cos\left(\beta + \frac{\theta}{2}\right) = \Delta X_i \cdot \frac{sin\,\beta}{sin\,\theta} \cdot cos\left(\beta + \frac{\theta}{2}\right) \dots\dots\dots\dots \text{⑨}$$

It can be seen that the difference between relationship ⑧ and relationship ⑨ is that in the latter, **cos ($\beta$ + $\theta$/2)** takes the place of **cos $\beta$** in the former, so that the latter is slightly larger numerically than the former. However, no matter what the scenario, the position adjustments of the two rows of tapered rollers 3 and 3' in the width direction of the raceways are always equidistant and synchronous, and do not prevent the guide ring member 5 from being firmly clamped between the two rows of tapered rollers 3 and 3' to serve a supporting function reliably. It is not difficult to understand that a similar conclusion is also applicable to the scenario shown in Fig. 4f in which the guide ring member 5 adjoins the outer rings 2 and 2'.

It must also be pointed out that although the novel tapered rollers have structural symmetry, the result of non-centred running thereof leads to the two rows of tapered rollers 3 and 3' having different radial adjustment directions. Specifically, as Fig. 5 shows, when the inner ring 1 is shifted towards the right, the right-row tapered roller 3' is "lifted up" in the radial direction, while the left-row tapered roller 3 is "pulled down" in the radial direction. It is not difficult to understand that this kind of "one-up, one-down" position adjustment of the two rows of tapered rollers 3 and 3' in the radial direction is always equidistant and reversed. Furthermore, the "additional contribution" made to the axial sideways shift of the guide ring member 5 by the right-row tapered roller 3' in the radial rising stage, by way of the specific shape of the large-end surface thereof, can always be correspondingly "eaten up" (cancelled out) by the left-row tapered roller 3 in the radial falling stage, by way of the identical shape of the large-end surface thereof. Clearly, the additional effects of the respective end surfaces of the two rows of tapered rollers 3 and 3' on the axial adjustment of the guide ring member 5, caused by the rising and falling of the radial positions, are always reversed and synchronous, so can cancel each other out in the axial direction, and will not give rise to fitting difficulties between the guide ring member 5 and the two-rows of tapered rollers 3 and 3' due to changes in distance. They will not result in the guide ring member 5 being insufficient to abut the tapered rollers 3 and 3' on both sides simultaneously due to being "too short", and will not result in the guide ring member 5 pushing apart the tapered rollers 3 and 3' on both sides excessively due to being "too long", both of which are unfavourable situations.

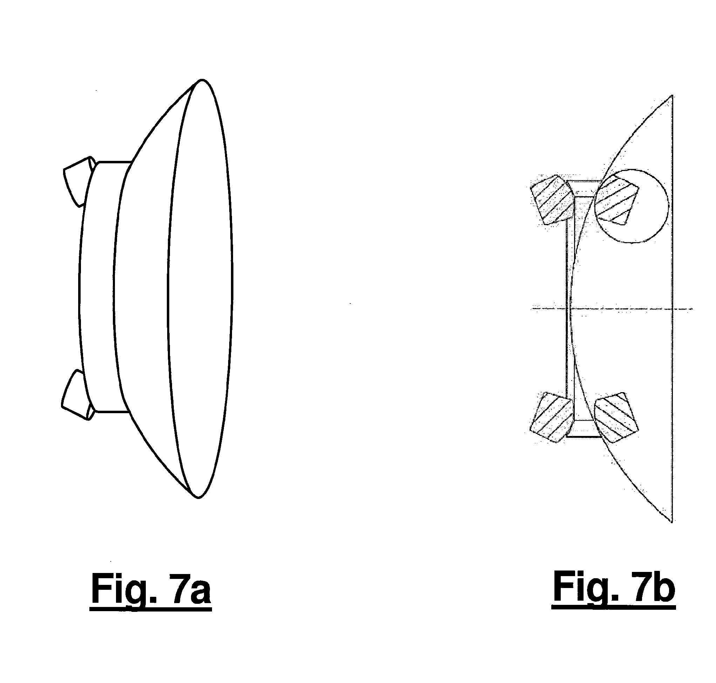

In order to further improve the fitting effect between the guide ring member 5 and the tapered rollers 3 and 3' on both sides, and reduce abutment friction, the arrangement can be designed such that the contact end surfaces of the guide ring member 5 and the tapered rollers 3 and 3' on both sides have corresponding shapes. For example, the large-end surfaces of the two rows of tapered rollers 3 and 3' may be made into convex spherical surfaces, while the abutment end surfaces at the two sides of the guide ring member 5 are made into concave spherical surfaces with a larger radius of curvature. As Figs. 7a and 7b show, such an internally tangent fit between a concave large spherical surface and a convex small spherical surface is conducive to the formation of a lubricating oil film between the contact end surfaces, helping to increase the reliability of support and reduce friction.

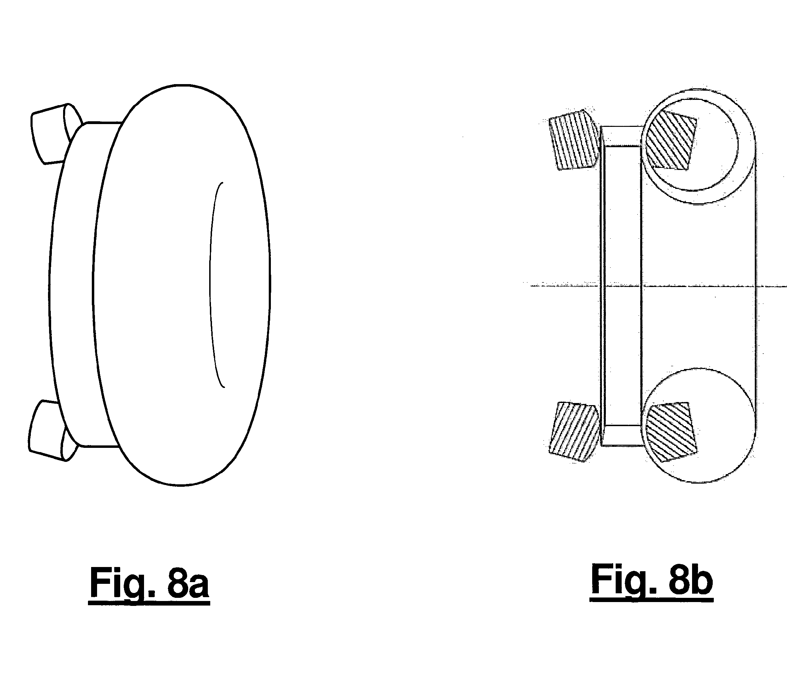

As an alternative, as Figs. 8a and 8b show, the end surfaces at the two sides of the guide ring member 5 may also be designed as a concave torus, which forms an internally tangent fit with the large-end surfaces which are concave spherical surfaces of the tapered rollers 3 and 3' on both sides. The torus mentioned here is a geometric concept, referring to a curved surface in space obtained by rotating a circle through one revolution around an axis that is coplanar with the circle. Generally, such a torus is similar in shape to a doughnut or lifebuoy, but if the axis is a chord on the circle, the torus obtained is a ring without a hole, commonly called a "spindle torus". When the axis passes through the centre of the circle, the torus returns to being a spherical surface. In this sense, the design shown in Figs. 7a and 7b, in which the end surfaces at the two sides of the guide ring member 5 are spherical surfaces, is in fact a special case of the torus design shown in Figs. 8a and 8b. Thus, in the case shown in Figs. 8a and 8b, the end surfaces at the two sides of the guide ring member 5 are formed as a concave torus, which forms an internally tangent fit with the large-end surfaces which are concave spherical surfaces of the tapered rollers 3 and 3' on both sides. Similarly to the case shown in Figs. 7a and 7b, the end surface fit shown in Figs. 8a and 8b is also conducive to the formation of a lubricating oil film between the contact surfaces, helping to improve support and reduce friction.

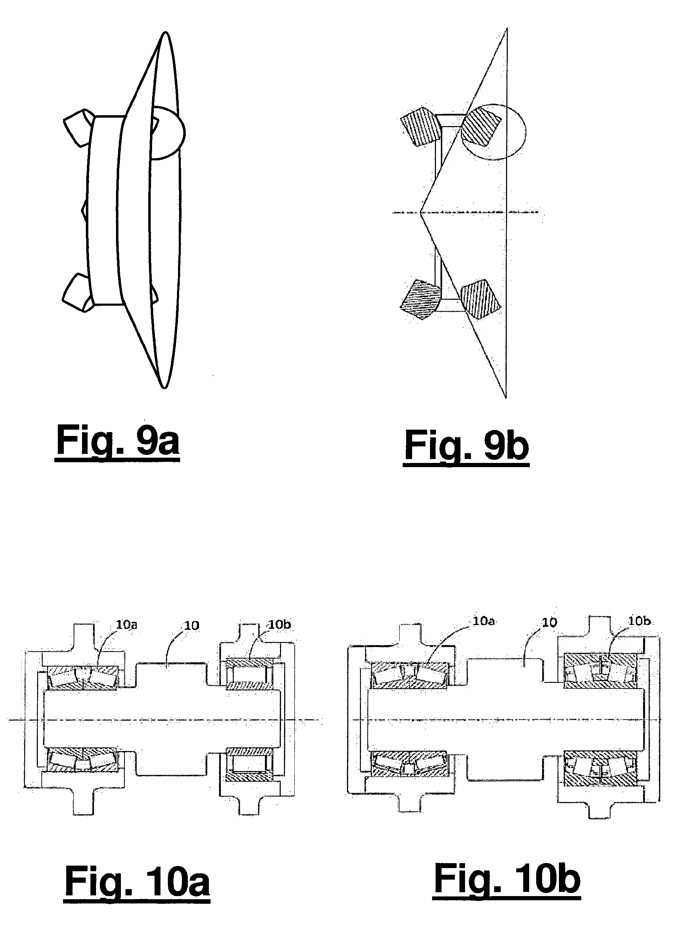

As a third option, as shown in Figs. 9a and 9b, the end surfaces at the two sides of the guide ring member 5 may also be designed to be formed as a conical surface with its apex on the bearing axis OO. In this case, the large-end surfaces of the two rows of tapered rollers 3 and 3' and the end surfaces at the two sides of the guide ring member 5 actually form an internally tangent fit of a conical surface with a spherical surface. This form of fitting involves a simple process and low costs. In the case where the radial dimension of the guide ring member 5 is not large, the contact effect is quite close to that in the case shown in Figs. 7a and 7b.

Besides the structural considerations mentioned above, more than one choice of material is possible for the guide ring member 5. For example, depending on the working conditions and the load characteristics, the material used to manufacture the guide ring member 5 may be carbon steel, steel alloys, copper alloys, aluminium alloys, sintered materials, composite materials or engineering plastics, etc.

Taking bearing steel (GCr15) as an example, it has high strength, high precision, good wear resistance and high versatility, and is an ideal material for making the guide ring member. Furthermore, certain steel alloys have superior strength and wear resistance to bearing steel, and can also serve as candidate materials.

Secondly, bronze materials (which are copper alloys), in particular beryllium bronze, tin bronze, lead bronze and aluminium bronze, have good wear resistance and shock absorption, and can serve as alternative materials for the guide ring member. The reason for bronze materials' wear resistance is that when they are rubbed, the phenomenon of metal flow will occur, with the result that the rubbed surface tends to be flattened, and is therefore very resistant to wear. When a solid lubricant is used, a situation where grease and powder coexist can develop, so the effect of wear resistance is even more ideal.

Next, aluminium alloy materials are lightweight, have good casting properties and are easy to process, and can also serve as candidate materials for the guide ring member.

Next, sintered materials are also an important option. Sintered materials are processed using metallurgical powder processes, and often have unique chemical compositions and mechanical/physical properties; certain properties thereof are difficult to achieve by conventional casting methods. For example, porous or half-densified materials made by a sintering process have good grease wettability, and can be made into oil-containing guide ring members, and therefore have self-lubrication capability.

Furthermore, composite materials, in particular fibre reinforced materials of various types, may also be used to make the guide ring member. A guide ring member made from a fibre reinforced material is lightweight and has high strength; a shortcoming is that heat is not easily dissipated during processing, and the material separates into layers easily.

Finally, high-quality engineering plastics have a very low coefficient of friction and good wear resistance even at high temperatures (not exceeding 160°C) and high loads, so can serve as component materials of the guide ring member 5, or be used as a surface material attached to the periphery of the guide ring member. Taking wear resistance as an example, fluoroplastics, nylon 1010, nylon 12 and nylon 66, etc. (all of which are engineering plastics) all have good wear resistance.

It can be seen from the above description that the key difference between the novel tapered roller bearing and a conventional tapered roller bearing is that: under preload conditions (within the range of the optimum play interval), the former is still capable of non-centred running to a certain degree. This ability means that it has extremely broad and completely new application prospects in practical production. Fig. 10a shows a bearing configuration in a conventional shaft system. The conventional shaft system includes a rotation shaft 10 used for mechanical transmission (equivalent to the "bearing rotation shaft" mentioned previously). The mechanical transmission includes (but is not limited to) conventional forms of mechanical transmission such as belt transmission, chain transmission, gear transmission and worm transmission. For this purpose, an apparatus or component for forms of transmission such as belt transmission, chain transmission, gear transmission and worm transmission may be correspondingly provided on the rotation shaft 10. The rotation shaft 10 is supported on an external fixing means (not shown in the figure) such as a gearbox housing by means of a locating-end configuration bearing 10a and a non-locating-end configuration bearing 10b (also called "free end"). The so-called locating-end configuration bearing 10a is conventionally a double-row tapered roller bearing, double-row angular contact ball bearing or single-row deep-groove ball bearing, etc. These types of bearing can withstand axial loads of different degrees and directions while withstanding radial loads, and can therefore be used for "locating" the rotation shaft 10 in the axial direction. For the purpose of illustration, the locating-end configuration bearing 10a shown in Fig. 10a is a conventional double-row tapered roller bearing, while the non-locating-end configuration bearing 10b is a cylindrical roller bearing. As is well-known, a cylindrical roller bearing has the capacity for axial adjustment (non-centred running) between the inner and outer rings thereof, and can ensure that thermal expansion of the rotation shaft 10 will not lead to failure of the locating-end configuration bearing 10a, so has been used widely in shaft systems as a non-locating-end configuration bearing. Although the cylindrical roller bearing has the above advantages, and can withstand very large radial loads, radial preloading thereof is often difficult to implement precisely in practice, or can only be implemented at high cost, as stated previously. In reality, a shaft system supported by an un-preloaded cylindrical roller bearing is inherently lacking in radial rigidity, and this is not only likely to give rise to vibration and noise, but also likely to make it difficult for the life of the cylindrical roller bearing itself to attain the optimum expected level (see the roller bearing life curve shown in Fig. 3).

Therefore, as an application of the present invention, as shown in Fig. 10b, the novel tapered roller bearing can be used to replace the cylindrical roller bearing shown in Fig. 10a, for wide use in shaft systems as a non-locating-end configuration bearing 10b. It is known from the foregoing description that the novel tapered roller bearing has not only inherited the capacity of the conventional tapered roller bearing for withstanding very high radial loads, but permits itself to carry out axial adjustment (non-centred running) simultaneously under preload conditions (within the range of the optimum play interval). The above feature means that when used in a conventional shaft system, the novel tapered roller bearing not only eliminates the inherent radial rigidity deficiency of a cylindrical roller bearing used as a non-locating-end configuration bearing, but also ensures that when used as a free-end configuration bearing, the novel tapered roller bearing can achieve the optimum expected life. In the above sense, the use of the novel tapered roller bearing helps to extend the service life and maintenance period of the whole shaft system overall.

The above explanation is merely based on the cases shown in the accompanying drawings, but those skilled in the art should understand that any other changes and improvements in form are included in the scope of protection of the present invention, as long as they comply with the definitions in the attached claims.

## Claims

1.  Tapered roller bearing, comprising double-row inner raceways (1w, 1w') arranged symmetrically face-to-face, double-row outer raceways (2w, 2'w'), and two rows of tapered rollers (3, 3') disposed between the double-row inner raceways (1w, 1w') and double-row outer raceways (2w, 2'w'), the two rows of tapered rollers (3, 3') each having a retaining frame (4, 4') for restraining the tapered rollers of the row in question and preventing contact between the rollers, **characterized in that** the novel tapered roller bearing is provided with a floating guide ring member (5) between the two rows of tapered rollers (3, 3'), for providing axial abutment and support for the two rows of tapered rollers (3, 3'), to permit the two rows of tapered rollers (3, 3') to be adjusted by shifting in the width direction of the raceways with non-centred running of the bearing.

2.  Tapered roller bearing according to Claim 1, **characterized in that** the double-row inner raceways (1w, 1w') are formed on a one-piece inner ring (1).

3.  Tapered roller bearing according to Claim 2, **characterized in that** a surface of the one-piece inner ring (1) is formed with a protruding member (5') for radially supporting the guide ring member (5).

4.  Novel tapered roller bearing according to Claim 1, **characterized in that** the double-row inner raceways (1w, 1w') are formed on double-row inner rings (1a, 1b), respectively, and that the guide ring member (5) adjoins the double-row inner rings (1a, 1b) and/or an inner spacer (1c) between the double-row inner rings (1a, 1b) for adjusting inner ring separation.

5.  Tapered roller bearing according to Claim 1, 2 or 4, **characterized in that** the double-row outer raceways (2w, 2'w') are formed on double-row outer rings (2, 2'), respectively, and that the guide ring member (5) adjoins the double-row outer rings (2, 2') and/or an outer spacer between the double-row outer rings (2, 2') for adjusting outer ring separation.

6. Tapered roller bearing according to any one of Claims 1 - 4, **characterized in that** the positions where the guide ring member 5 abuts the two rows of tapered rollers (3, 3') substantially cover the axes of rotation of the latter in the radial direction.

7. Tapered roller bearing according to any one of Claims 1 - 4, **characterized in that** the positions where the guide ring member 5 abuts the two rows of tapered rollers (3, 3') deviate from the axes of rotation of the latter in the radial direction.

8. Tapered roller bearing according to any one of Claims 1 - 4, **characterized in that** the mutually abutting end surfaces of the guide ring member 5 and two rows of tapered rollers (3, 3') have corresponding shapes.

9. Tapered roller bearing according to Claim 8, **characterized in that** the guide ring member (5) and two rows of tapered rollers (3, 3') form an internally tangent fit between a concave large spherical or concave large torus surface and a convex small spherical surface at mutually abutting end surfaces.

10. Tapered roller bearing according to Claim 8, **characterized in that** the guide ring member (5) and two rows of tapered rollers (3, 3') on both sides form an internally tangent fit between a large conical surface and a small spherical surface at mutually abutting end surfaces.

11. Tapered roller bearing according to any one of Claims 1 - 4, **characterized in that** the material used to manufacture the guide ring member (5) is at least one of carbon steel, steel alloy, copper alloy, aluminium alloy, sintered material, composite material and engineering plastic, and/or that the guide ring member (5) incorporates an engineering plastic on a surface thereof.

12. Tapered roller bearing according to any one of Claims 1 - 4, **characterized in that** rolling surfaces of the two rows of tapered rollers (3, 3') have a convex structure with a logarithmic profile or crowned profile.

13. Shaft system, comprising a rotation shaft (10) for mechanical transmission, the rotation shaft (10) being supported on a fixing means by two configuration bearings (10a, 10b) distributed in the axial direction, the two configuration bearings (10a, 10b) being a locating-end configuration bearing (10a) which prohibits position adjustment of the rotation shaft (10) in the axial direction, and a non-locating-end configuration bearing (10b) which permits position adjustment of the rotation shaft (10) in the axial direction, **characterized in that** the non-locating-end configuration bearing (10b) is the novel tapered roller bearing according to any one of Claims 1 - 12.

14. Shaft system according to Claim 13, **characterized in that** the locating-end configuration bearing (10a) is a double-row tapered roller bearing, double-row angular contact ball bearing or single-row deep-groove ball bearing.

15. Shaft system according to Claim 13 or 14, **characterized in that** a mechanism or component for belt transmission, chain transmission, gear transmission or worm transmission is provided on the rotation shaft (10).

**Fig. 1b**

**Fig. 1a**

14

**Fig. 2a**

**Fig. 2b**

m

**Fig. 2c**

expected life

1.1
1.0
0.8
0.6
0.4
0.2

P

0

- effective inernal play +

**Fig. 3**

EP 2 982 875 A1

**Fig. 4a**

**Fig. 4b**

**Fig. 4c**

**Fig. 4d**

**Fig. 4e**

**Fig. 4f**

**Fig. 5**

**Fig. 6**

**Fig. 7b**

**Fig. 7a**

Fig. 8b

Fig. 8a

**Fig. 9a**

**Fig. 9b**

**Fig. 10a**

**Fig. 10b**

**Europäisches Patentamt**
**European Patent Office**
**Office européen des brevets**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2010 022696 A1 (SCHAEFFLER TECHNOLOGIES GMBH [DE]) 8 December 2011 (2011-12-08) * the whole document * | 1,2,7-9 | INV. F16C19/38 F16C33/37 F16C23/08 F16C19/28 F16C33/36 ADD. F16C19/54 |
| X | DE 496 492 C (ASCHAFFENBURGER MASCHINENFABRI) 22 April 1930 (1930-04-22) * the whole document * | 1,5,7,8, 13,14 | |
| A | | 2 | |
| A | US 931 924 A (HESS HENRY [US]) 24 August 1909 (1909-08-24) * the whole document * | 1-3,5,6, 8 | |
| A | DE 101 53 438 C1 (SKF AB [SE]) 20 March 2003 (2003-03-20) * paragraphs [0040], [0041]; figure 3 * | 1,2 | |
| A | DE 10 2009 051858 A1 (SCHAEFFLER TECHNOLOGIES GMBH [DE]) 5 May 2011 (2011-05-05) * the whole document * | 1,2 | |
| A | US 2 387 962 A (WILLIAMS ARTHUR H) 30 October 1945 (1945-10-30) * the whole document * | 1-3,6,8 | TECHNICAL FIELDS SEARCHED (IPC) F16C |
| A | US 1 511 480 A (KNOWLES HARFORD C) 14 October 1924 (1924-10-14) * the whole document * | 1,2,5,7, 8 | |
| A | DE 10 2010 023206 A1 (SCHAEFFLER TECHNOLOGIES GMBH [DE]) 15 December 2011 (2011-12-15) * the whole document * | 1,2,6,8 | |
| A | US 2 130 379 A (ROLAND CHILTON) 20 September 1938 (1938-09-20) * the whole document * | 1,6,10 | |

-/--

The present search report has been drawn up for all claims

| Place of search | Date of completion of the search | Examiner |
|---|---|---|
| Munich | 23 December 2015 | De Jongh, Cornelis |

EPO FORM 1503 03.82 (P04C01)

Europäisches
Patentamt
European
Patent Office
Office européen
des brevets

**EUROPEAN SEARCH REPORT**

Application Number

EP 15 16 8801

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2 664 325 A (BERGSTROM ALBERT L) 29 December 1953 (1953-12-29) * the whole document * ----- | 1 | |

TECHNICAL FIELDS SEARCHED (IPC)

The present search report has been drawn up for all claims

| Place of search | Date of completion of the search | Examiner |
|---|---|---|
| Munich | 23 December 2015 | De Jongh, Cornelis |

**ANNEX TO THE EUROPEAN SEARCH REPORT
ON EUROPEAN PATENT APPLICATION NO.**                    EP 15 16 8801

This annex lists the patent family members relating to the patent documents cited in the above-mentioned European search report.
The members are as contained in the European Patent Office EDP file on
The European Patent Office is in no way liable for these particulars which are merely given for the purpose of information.

23-12-2015

| Patent document cited in search report | | Publication date | Patent family member(s) | | Publication date |
|---|---|---|---|---|---|
| DE 102010022696 | A1 | 08-12-2011 | NONE | | |
| DE 496492 | C | 22-04-1930 | NONE | | |
| US 931924 | A | 24-08-1909 | NONE | | |
| DE 10153438 | C1 | 20-03-2003 | DE 10153438 | C1 | 20-03-2003 |
| | | | JP 3806391 | B2 | 09-08-2006 |
| | | | JP 2003202015 | A | 18-07-2003 |
| DE 102009051858 | A1 | 05-05-2011 | NONE | | |
| US 2387962 | A | 30-10-1945 | NONE | | |
| US 1511480 | A | 14-10-1924 | NONE | | |
| DE 102010023206 | A1 | 15-12-2011 | NONE | | |
| US 2130379 | A | 20-09-1938 | NONE | | |
| US 2664325 | A | 29-12-1953 | NONE | | |